# EUROPÄISCHE PATENTSCHRIFT

(11) **EP 0 479 052 B1**
(45) Veröffentlichungstag und Bekanntmachung des Hinweises auf die Patenterteilung: **05.04.1995**
(21) Anmeldenummer: 91115888.9
(22) Anmeldetag: 19.09.1991
(51) Int. Cl.: B01D 35/06

(54) **Verfahren zur Abscheidung von Metallionen aus Prozess- und Abwässern**
Separation process of metal ions from process- and waste water
Procédé de séparation des ions métalliques à partir des eaux de traitement et des eaux usées

(30) Priorität: 29.09.1990 DE 4030912
(43) Veröffentlichungstag der Anmeldung: 08.04.1992
(73) Patentinhaber: BASF Aktiengesellschaft, 67063 Ludwigshafen (DE)
(72) Erfinder: Huber, Günther, W-6701 Dannstadt-Schauernheim (DE); Haberman, Wolfgang, W-6500 Mainz 1 (DE); Goesele, Walter, Dr., W-6900 Heidelberg (DE); Klassen, Rolf, W-6720 Speyer (DE)

(56) Entgegenhaltungen:
- US-A- 3 951 799

## Beschreibung

Die vorliegende Erfindung betrifft ein Verfahren zur Abscheidung von Metallionen aus Prozeß- und Abwässern, deren Redoxpotential positiver als εₕ = -800 mV ist.

Aus der US-A-3 755 114 ist bekannt, aus Abwässern, welche gelöste Metallverbindungen enthalten, und die aus Umweltgründen nicht ohne weiteres verworfen werden können, die Metalle auf elektrochemischem Wege zu entfernen. Zu diesem Zwecke werden die Prozeß- und Abwässer einer elektrochemischen Behandlung unterworfen, wobei die Metallionen an der Oberfläche einer in die Prozeß- oder Abwässer eintauchenden Kathode reduziert und abgeschieden werden. Für technische Elektrolysen, insbesondere für verdünnte Metallsalzlösungen, werden bevorzugt großflächige Kathoden eingesetzt, um hohe Raum-Zeit-Aubeuten, niedrige Zellspannungen und einen entsprechend geringen Energiebedarf zu bekommen. Als großflächige Kathoden verwendet man Schüttbettkathoden, Wirbelbett- oder Fließkathoden, rotierende Pulverkathoden, Kohlefilzkathode, Plattenstapelkathoden sowie perforierte Materialien. Unbefriedigend bei den aufgeführten Verfahrenstechniken ist, daß entweder
- die Raum-Zeit-Ausbeuten unzureichend sind, so daß hohe Investitionskosten für die Elektrolysezellen anfallen oder
- die Strom-Ausbeuten zu niedrig sind, wodurch die Betriebskosten unverhältnismäßig hoch werden.

Außerdem bereitet die Abtrennung des Metalls von der Kathode in den meisten Fällen bei den aufgeführten Verfahrenstechniken erhebliche Schwierigkeiten, so daß zusätzliche Aufarbeitungsschritte notwendig sind. Diese aufgeführten Mängel führen dazu, daß in vielen Fällen insbesondere im Hinblick auf die von der Behörde geforderten Metallionenrestkonzentrationen, keine wirtschaftliche Aufarbeitung der Prozeß- und Abwässer auf elektrochemischem Wege möglich ist.

Aufgabe der vorliegenden Erfindung ist es, Metallionen aus Prozeß- und Abwässern an einer elektrisch leitenden kathodisch polarisierten Filterhilfsschicht so abzuscheiden, daß man bei hohen Raum-Zeit-Ausbeuten und einem geringen Energieverbrauch Metallrestgehalte von ≦ 0,5 ppm, vorzugsweise ≦ 0,1 ppm, im Prozeß- und Abwasser erhält.

Die Aufgabe wurde erfindungsgemäß dadurch gelöst, daß man eine elektrisch leitende kathodisch polarisierte Filterhilfsschicht, deren Potential mindestens 50 mV negativer als das Redoxpotential der abzuscheidenden Metallionen liegt, mit dem metallionenhaltigen Wasser durchströmt und die Filterhilfsschicht in Abständen von 2 bis 180 Minuten durch Rückspül-, Klassierprozesse periodisch erneuert.

Weitere Ausgestaltungen der Erfindung sind Gegenstand der Unteransprüche 2 bis 12.

Als elektrisch leitendes Material für die Filterhilfsschichten werden Metallgranulate der abzuscheidenden Metallionen wie z.B. Kupfer, Zink oder Cadmium und/oder Kohlenstoff oder kohlenstoffhaltige Materialien wie z.B. Aktivkohlen, Aktivkohlevorprodukte, Anthrazit, Braunkohlen, Steinkohlen, Koks, Naturgraphit oder Elektrographit eingesetzt. Bevorzugt verwendet man Elektrographit oder Naturgraphit als Material für die Filterhilfsschichten. Der Elektrographit und Naturgraphit sowie die anderen kohlenstoffhaltigen Materialien sollen weniger als 0,005 Gew.-% an Metallen oder Metallverbindungen der 5., 6. und 8. Nebengruppe des Periodischen Systems der Elemente enthalten, damit die Filterhilfsschicht nicht zusammenwachsen kann.

Die Korngröße der elektrisch leitenden Partikel kann 5 bis 500 »m betragen. Bevorzugt verwendet man Korngrößen von 30 bis 200 »m, damit keine Diffusionsbehinderungen auftreten und ein optimaler Stoffaustausch möglich ist.

Die Höhe der Filterhilfsschicht sollte mehr als 0,3 mm betragen um eine Beschichtung sowie ein Zuwachsen des flüssigkeitsdurchlässigen elektrisch leitenden Trägers der Filterhilfsschicht zu vermeiden. Als obere Grenze für die Filterhilfsschicht sollten 10 mm nicht überschritten werden, damit es nicht durch den Spannungsabfall in der Filterhilfsschicht zur Wasserstoffabscheidung am elektrisch leitenden Träger für die Filterhilfsschicht kommt. Bevorzugt sind Filterhilfsschichten von 0,6 bis 3 mm Höhe.

Als Träger für die Filterhilfsschicht werden elektrisch leitende, flüssigkeitsdurchlässige Materialien verwendet, die in Form von Filterplatten oder Filterkerzen als Gewebe bzw. Sinterkörper ausgeführt werden. Der Porendurchmesser der Filtergewebe oder Sinterkörper kann 30 bis 300 »m, vorzugsweise 60 bis 120 »m betragen.

Die Polarisation der Filterhilfsschichten erfolgt über die elektrisch leitenden, flüssigkeitsdurchlüssigen Trägermaterialien. Als Träger verwendet man Materialien mit geringer Oberflächenrauhigkeit, die bei einer Stromdichte von 1 kA/m² mindestens eine Wasserstoffüberspannung von ≧400 mV aufweisen, damit die Filterhilfsschicht ohne Wasserstoffentwicklung auf die gewünschen Potentiallagen polarisiert werden kann. Geeignete Materialien sind z.B. Siliciumstähle, Kupfer, Silber und Graphit.

Der Prozeß- und Abwasserdurchsatz durch die Filterhilfsschüttung kann 0,5 bis 300 m³/m²·h betragen. Besonders vorlteilhaft sind Durchsätze von 5 bis 50 m³/m²·h. Der Druckverlust in der Anschwemmschicht bei diesen Durchsätzen sollte im Bereich von 0,2 bis 3 bar liegen. Als günstig hat sich ein Bereich von 0,4 bis 1 bar erwiesen.

Die Stromdichte bei der kathodischen Polarisation der Filterhilfsschicht kann 0,1 bis 10 kA/m² betragen. Bevorzugt arbeitet man bei Stromdichten von 0,5 bis 3 kA/m².

Als Anodenmaterialien für die Elektrolysezelle setzt man dimensionstabile Materialien mit niedrigen Sauerstoffüberspannungen ein. Geeignete Anodenmaterialien mit geringen Sauerstoffüberspannungen sind z.B. Titanträger mit elektrisch leitenden Zwischenschichten aus Boriden und/oder Carbiden und/oder Siliciden der IV. bis VI. Nebengruppe oder gegebenenfalls mit Platinmetallen dotierten Tantal und/oder Niob, deren Oberfläche mit elektrisch leitenden, nicht stöchiometrischen Mischoxiden aus Ventilmetallen der IV. bis VI. Nebengruppe des Periodischen Systems der Elemente und Metallen oder Metalloxiden der Platingruppe oder Platinmetallverbindungen wie z.B. Platinaten dotiert sind. Bevorzugt kommen Mischoxide des Tantal-Iridiums, Tantal-Platins und Tantal-Rhodiums sowie Platinate vom Typ Li_{0,3}Pt₃O₄ in Betracht. Zur Vergrößerung der Oberfläche sollten die Titanträger oberflächlich aufgerauht oder makroporös sein.

Die Anoden sind durch ein Diaphragma oder eine Kationenaustauschermembran vom Prozeß- oder Abwasser und der kathodisch polarisierten Filterhilfsschicht separiert.

Geeignete Diagragmen sind keramische Materialien auf Basis von Aluminiumoxid und/oder Zirkonoxid oder perfluorierte Olefine, die zusätzlich ionenaustauschende Gruppen enthalten.

Als Kationenaustauschermembranen werden bevorzugt Polymere auf Basis von perfluorierten Olefinen oder Copolymere aus Tetrafluorethylen mit ungesättigten perfluorierten Ethern oder Copolymere aus Styrol und Divinylbenzol verwendet, die als ladungstragende Gruppen Sulfonsäure- und Carboxylgruppen oder nur Sulfonsäuregruppen enthalten. Bevorzugt werden Membranen verwendet, die nur Sulfonsäuregruppen enthalten, da sie wesentlich beständiger gegenüber Einlagerungen und Verschmutzungen durch mehrwertige Kationen sind.

Als Elektrolyte im Anodenraum werden wäßrige sauerstoffionenhaltige Mineralsäuren eingesetzt, wie z.B. Schwefelsäure oder Posphorsäure. Besonders günstig ist wäßrige 5- bis 20 gew.-%ige Schwefelsäure.

Zur Metallabreicherung durchströmt man die Filterhilfsschicht und den Filterhilfsschichtträger mit dem metallionenhaltigen Prozeß- und Abwasser, wobei die Metallabscheidung in einer Tiefe bis zu 0,3 mm in der Filterhilfsschicht stattfindet. Es ist deshalb zweckmäßig Filterhilfsschichten von mindestens 0,5 mm Dicke zu verwenden, um Metallabscheidungen auf dem Träger für die Filterhilfsschicht auszuschließen. Die Erneuerung der Filterhilfsschicht durch Rückspül-, Klassier- und Anschwemmprozesse sollte vorzugsweise alle 4 bis 20 Minuten erfolgen, um eine starke Verdichtung der Filterhilfsschicht zu vermeiden.

Die Abscheidung der Metallionen aus dem Prozeß- oder Abwasserstrom kann im Batchbetrieb oder kontinuierlich erfolgen. Beim kontinuierlichen Betrieb ist das Stromangebot, der Prozeß- oder Abwasserdurchsatz und die Anzahl der in Reihe geschalteten Elektrolysezellen für die angestrebte Metallionenrestkonzentration im Wasser maßgebend. Zur Kontrolle der Metallabscheidung hat es sich als günstig erwiesen, das Potential der Filterhilfsschicht gegen eine Referenzelektrode zu messen. Als Referenzelektroden kommen z.B. Thalamid, Silber/Silberchlorid- oder Kalomelektroden in Betracht. Mit dieser Verfahrenstechnik können z.B. die Metallionen der folgenden Metalle aus Prozeß- und Abwässern entfernt werden: Kupfer, Silber, Gold, Arsen, Wismut, Cadmium, Kobalt, Chrom, Eisen, Gallium, Indium, Germanium, Molybdän, Nickel, Blei, Antimon, Selen, Quecksilber, Tellur, Thallium, Zinn und Zink.

Das erfindungsgemäße Verfahren eignet sich insbesondere zur Abreicherung von Metallionen aus Prozeß- und Abwässern zur Restkonzentrationen von ≦ 0,1 ppm. Die Metallabscheidung an der kathodisch polarisierten Filterhilfsschicht ermöglicht für die Metalle der 1. Nebengruppe hohe Raum-Zeit-Ausbeuten bei Stromausbeuten von ≧ 95 %. Die gegenüber den bisherigen Metallabscheidezellen wesentlich höheren Stromdichten, die bis zu 10 kA/m² geometrischer Oberfläche betragen können, führen zu einer erheblichen Einsparung an Elektrodenfläche und Elektrolysezellenvolumen. Das anfallende Metall kann in einfacher Weise durch Rückspülung aus der Elektrolysezelle ausgetragen werden. Eine Trennung des Metalls von der Filterhilfsschicht bei Verwendung von Kohlenstoff oder kohlenstoffhaltigen Filterhilfsschichten kann chemisch oder durch Klassierung erfolgen.

### Beispiel

In einem Glasgefäß (1) von 10 l Inhalt gemäß Figur a/b wird ein Filterhilfsschichtträger aus V₄A (4571) von 300 mm Länge und 50 mm Durchmesser (2) eingebaut. Die Maschenweite des Filterhilfsschichtträgers beträgt 100 »m. Um diesen Filterhilfsschichtträger sind im Abstand von ∼ 20 mm konzentrisch sechs dotierte Titananoden (3) von 300 mm Länge, 17 mm Breite und 1,5 mm Länge angeordnet. Das Coating der Titananoden besteht aus einem Iridium-Tantalmischoxid. Zusätzlich sind diese Anoden durch Kationenaustauschermembranrohre (4) von 20 mm Durchmesser vom Prozeß- oder Abwasserstrom separiert. Als Hilfselektrolyt befindet sich in den Kationenaustauschermembranrohren wäßrige, 10 gew.-%ige Schwefelsäure. Die Filterhilfsschicht (5) für die Kathode besteht aus Naturgraphitgranulat, das eine Korngröße von 20 bis 500 »m aufweist.

Zur Prüfung der Elektrolysezelle für den Batchbetrieb werden mit dem metallsalzhaltigen Prozeß- oder Abwasser etwa 150 g Elektrographitgranulat von 40 bis 200 »m Korngröße auf den Filterhilfsschichtträger angeschwemmt, so daß sich eine Filterhilfsschicht von ∼ 2 mm Dicke auf dem Träger befindet. Der Filterhilfsschichtträger und die Filterhilfsschicht wird beim Betrieb der Zelle mit einer Stromstärke von 50 A bzw. Stromdichte von 0,97 kA/m² kathodisch polarisiert, während das Prozeß- oder Abwasser die Filterhilfsschicht im Kreislauf durchströmt. Siehe hierzu die Fig. a). Zur Kontrolle des Endpunktes der Metallabscheidung wird das Potential der Filterhilfsschicht gegen eine Silber/Silberchlorid-Referenzelektrode gemessen.

Bei einer Temperatur von +28°C, einem Durchsatz von 1200 l/h durch die Filterhilfsschicht und einem Druckverlust von 0,3 bar werden mit den aufgeführten Abwässern folgende Ergebnisse erhalten:

| Abwasser Typ | | Me C_{A} ppm | Me C_{E} ppm | Potential C_{A} mV | Potential C_{E} mV | Stromausbeute % |
|---|---|---|---|---|---|---|
| Kupfer in H₂SO₄ | 10 %ig | 1000 | ∼4,0 | -∼14 | ∼90 | ∼100,0 |
| Kupfer in H₂SO₄ | 10 %ig | 1000 | ∼0,1 | -∼14 | ∼450 | 98,5 |
| Silber in H₂SO₄ | 5 %ig | 840 | 3,0 | ∼+200 | -50 | ∼100,0 |
| Silber in H₂SO₄ | 5 %ig | 840 | <0,1 | ∼+200 | ∼450 | 98,6 |
| Cadmium in Na₂SO₄ | 10 %ig | 520 | 2,5 | ∼-750 | ∼1018 | 80 |
| Cadmium in Na₂SO₄ | 10 %ig | 520 | <0,1 | ∼-750 | ∼1085 | 75 |

Nach einer Betriebszeit von jeweils 8 Minuten wurde die Filterhilfsschicht durch Rückspül-, Klassierprozesse periodisch erneuert.

Neben den aufgeführten Metallen wurden aus schwach sauren Abwässern im pH-Bereich von 1,8 bis 6 die Metall Wismuth, Zinn, Zink, Nickel, Quecksilber, Arsen, Blei und Molybdän mit dieser Elektrolysezellenanordnung abgeschieden. Hierbei wurden Metallionenrestkonzentrationen von 0,5 ppm erreicht.

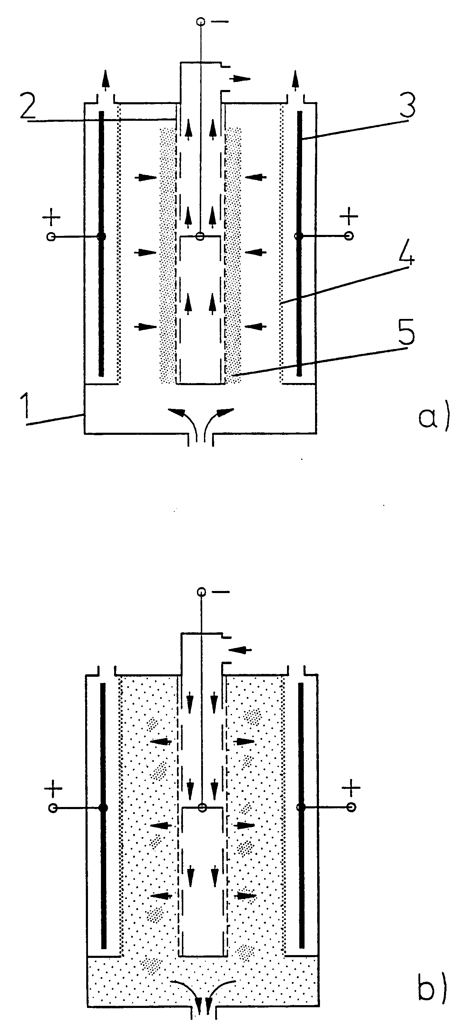

## Patentansprüche

1. Verfahren zur Abscheidung von Metallionen aus Prozeß- und Abwässern, deren Redoxpotential positiver als εₕ =-800 mV ist, dadurch gekennzeichnet, daß man in eine Elektrolysetelle eine elektrisch kathodisch polarisierte Filterhilfsschicht, deren Potential mindestens 50 mV negativer als das Redoxpotential der abzuscheidenden Metallionen liegt, mit dem metallionenhaltigen Wasser durchströmt und die Filterhilfsschicht in Abständen von 2 bis 180 Minuten chemisch oder durch Klassierprozesse periodisch erneuert.

2. Verfahren nach Anspruch 1, dadurch gekennzeichnet, daß als Material für die elektrisch leitenden Filterhilfsschichten die Metallgranulate der abzuscheidenden Metallionen und/oder Kohlenstoff oder kohlenstoffhaltigen Materialien in einer Korngröße von 5 bis 100 »m verwendet werden.

3. Verfahren nach Anspruch 1, dadurch gekennzeichnet, daß man als Material für die elektrisch leitenden Filterhilfsschichten Graphit verwendet, der weniger als 0,05 Gew.-% an Metallen oder Metallverbindungen der 5., 6. und 8. Nebengruppe des periodischen Systems der Elemente enthält.

4. Verfahren nach Anspruch 1 bis 3, dadurch gekennzeichnet, daß die Schichthöhe der Filterhilfsschicht 0,3 bis 10 mm beträgt.

5. Verfahren nach Anspruch 1 bis 4, dadurch gekennzeichnet, daß die Filterhilfsschicht sich auf einem elektrisch leitenden Träger befindet, der aus einem flüssigkeitsdurchlässigen Sintermaterial oder Gewebe besteht.

6. Verfahren nach Anspruch 5, dadurch gekennzeichnet, daß die Kontaktierung der elektrisch leitenden Filterhilfsschicht über den elektrisch leitenden Träger erfolgt, der eine Wasserstoffüberspannung von ≧400 mV bei einer Stromdichte von 1 kA/m² aufweist.

7. Verfahren nach Anspruch 1 bis 6, dadurch gekennzeichnet, daß der Druckverlust in der Filterhilfsschicht 0,2 bis 3 bar und der Prozeß- oder Abwasserdurchsatz 1 bis 300 m³/m²·h beträgt.

8. Verfahren nach Anspruch 1 bis 7, dadurch gekennzeichnet, daß die Filterhilfsschicht mit einer Stromdichte von 0,1 bis 10 kA/m² polarisiert wird.

9. Verfahren nach Anspruch 1 bis 8, dadurch gekennzeichnet, daß die Filterhilfsschicht gegen eine abwasserbeständige oberflächlich mit Platinmetallen oder Platinmetallmischoxiden dotierte Anode polarisiert wird.

10. Verfahren nach Anspruch 1 bis 9, dadurch gekennzeichnet, daß die Anode durch ein Diaphragma oder eine Kationenaustauschermembran vom Prozeß- oder Abwasser und der kathodisch polarisierten Filterhilfsschicht separiert ist.

11. Verfahren nach Anspruch 1 bis 10, dadurch gekennzeichnet, daß der Anodenraum eine verdünnte, sauerstoffionenhaltige Mineralsäure enthält.

12. Verfahren nach Anspruch 1 bis 11, dadurch gekennzeichnet, daß das metallionenhaltige Prozeß- oder Abwasser in Batchfahrweise oder im kontinuierlichen Betrieb durch die Filterhilfsschicht und den Filterhilfsschichtträger geführt wird bis die Endkonzentration von ≦0,5 ppm erreicht ist.

## Claims

1. A process for removing metal ions whose redox potential is on the positive side of ε_{H} = -800 mV from process wastewaters, which comprises passing the metal ion-containing water through an electrically conducting cathodically polarized filter-aid layer of an electrolysis cell whose potential is at least 50 mV more negative than the redox potential of the metal ions to be removed and periodically renewing the filter-aid layer at intervals of from 2 to 180 minutes by chemical means or by classifying processes.

2. A process as claimed in claim 1, wherein the material used for the electrically conducting filter-aid layer comprises metal granules corresponding to the metal ions to be removed and/or carbon or a carbon-containing material in a particle size of from 5 to 100 »m.

3. A process as claimed in claim 1, wherein the material used for the electrically conducting filter-aid layer is graphite which contains less than 0.05 % by weight of metals or metal compounds of subgroups 5, 6 and 8 of the periodic table.

4. A process as claimed in claim 1 or 2 or 3, wherein the filter-aid layer is from 0.3 to 10 mm in depth.

5. A process as claimed in claim 1 or 2 or 3 or 4, wherein the filter-aid layer is situated on an electrically conducting support comprising a liquid-permeable sinter material or fabric.

6. A process as claimed in claim 5, wherein the electrically conducting filter-aid layer is contacted via the electrically conducting support which has a hydrogen overvoltage of ≧400 mV at a current density of 1 kA/m².

7. A process as claimed in claim 1 or 2 or 3 or 4 or 5 or 6, wherein the pressure drop across the filter-aid layer is from 0.2 to 3 bar and the process wastewater throughput is from 1 to 300 m³/m²·h.

8. A process as claimed in claim 1 or 2 or 3 or 4 or 5 or 6 or 7, wherein the filter-aid layer is polarized with a current density of from 0.1 to 10 kA/m².

9. A process as claimed in claim 1 or 2 or 3 or 4 or 5 or 6 or 7 or 8, wherein the filter-aid layer is polarized against a wastewater-resistant anode superficially doped with a platinum metal or a platinum metal mixed oxide.

10. A process as claimed in claim 1 or 2 or 3 or 4 or 5 or 6 or 7 or 8 or 9, wherein the anode is separated from the process wastewater and the cathodically polarized filter-aid layer by a diaphragm or a cation exchange membrane.

11. A process as claimed in claim 1 or 2 or 3 or 4 or 5 or 6 or 7 or 8 or 9 or 10, wherein the anode compartment contains a dilute, oxygen ion-containing mineral acid.

12. A process as claimed in claim 1 or 2 or 3 or 4 or 5 or 6 or 7 or 8 or 9 or 10 or 11, wherein the metal ion-containing process wastewater is passed batchwise or continuously through the filter-aid layer and the filter-aid layer support until the final concentration of ≦0.5 ppm is reached.

## Revendications

1. Procédé de séparation d'ions métalliques d'eaux résiduaires et de traitement, dont le potentiel redox est plus positif que εₕ = -800 mV, caractérisé en ce que, dans une cellule d'électrolyse, on fait traverser une couche adjuvante de filtration conductrice de l'électricité et cathodiquement polarisée, dont le potentiel est d'au moins 50 mV plus négatif que le potentiel redox des ions de métaux à séparer, par l'eau contenant les ions de métaux et on régénère périodiquement la couche adjuvante de filtration à des intervalles de 2 à 180 minutes à l'aide de procédés chimiques ou à classement.

2. Procédé suivant la revendication 1, caractérisé en ce que, a titre de matériau pour les couches adjuvantes de filtration conductrices de l'électricité, on utilise des granulés de métaux des ions de métaux à séparer et/ou du carbone ou des matériaux contenant du carbone, d'une granulométrie de 5 à 100 »m.

3. Procédé suivant la revendication 1, caractérisé en ce que, à titre de matériau pour des couches adjuvantes de filtration conductrices de l'électricité, on utilise du graphite qui contient moins de 0,05% en poids de métaux ou de composés de métaux du cinquième, sixième et huitième sous-groupes du système périodique des éléments.

4. Procédé suivant l'une quelconque des revendications 1 à 3, caractérisé en ce que la hauteur de couche de la couche adjuvante de filtration varie de 0,3 à 10 mm.

5. Procédé suivant l'une quelconque des revendications 1 à 4, caractérisé en ce que la couche adjuvante de filtration se trouve sur un support conducteur de l'électricité, qui se compose d'un tissu ou d'un matériau fritté, perméable aux liquides.

6. Procédé suivant la revendication 5, caractérisé en ce que la mise en contact de la couche adjuvante de filtration conductrice de l'électricité s'effectue par l'intermédiaire d'un support conducteur de l'électricité, qui présente une surtension d'hydrogène supérieure ou égale à 400 mV à une densité de courant de 1 kA/m².

7. Procédé suivant l'une quelconque des revendications 1 à 6, caractérisé en que la perte de pression dans la couche adjuvante de filtration varie de 0,2 à 3 bars et le débit de l'eau de traitement ou de l'eau résiduaire fluctue de 1 à 300 m³/m².h.

8. Procédé suivant l'une quelconque des revendications 1 à 7, caractérisé en ce que l'on polarise la couche adjuvante de filtration avec une densité de courant de 0,1 à 10 kA/m².

9. Procédé suivant l'une quelconque des revendications 1 à 8, caractérisé en ce que l'on polarise la couche adjuvante de filtration vis-à-vis d'une anode résistant à l'eau résiduaire dopée en surface de métaux de la classe du platine ou d'oxydes mixtes de métaux de la classe du platine.

10. Procédé suivant l'une quelconque des revendications 1 à 9, caractérisé en ce que l'anode est séparée de l'eau de traitement ou de l'eau résiduaire et de la couche adjuvante de filtration cathodiquement polarisée par un diaphragme ou une membrane échangeuse de cations.

11. Procédé suivant l'une quelconque des revendications 1 à 10, caractérisé en ce que l'enceinte anodique contient un acide minéral dilué, contenant des ions oxygène.

12. Procédé suivant l'une quelconque des revendications 1 à 11, caractérisé en ce que l'on fait passer l'eau résiduaire ou l'eau de traitement contenant des ions de métaux à travers la couche adjuvante de filtration et le support de la couche adjuvante de filtration en service continu ou par lots successifs jusqu'à l'on atteigne une concentration finale égale ou inférieure à 0,5 ppm.
